# EUROPEAN PATENT APPLICATION

(11) **EP 4 576 631 A1**
(43) Date of publication of application: **25.06.2025**
(21) Application number: 23849316.7
(22) Date of filing: 31.07.2023
(51) Int. Cl.: H04L 5/00, H04W 72/12

(54) **METHOD AND APPARATUS FOR WIRELESS COMMUNICATION**

(30) Priority: 01.08.2022 CN 202210915272
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/110079
(87) International publication number: WO 2024/027608

(57) **Abstract**

Disclosed in the present application are a method and apparatus for wireless communication. The node receiving a first-type RRC signaling set first, then receiving the target DCI and receiving signals on the cells included in a first cell set; the first-type RRC signaling set comprises a target RRC signaling, which is configured for a target cell; the target DCI is used for scheduling the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling. The present application improves the configuration of a single DCI to schedule a plurality of carriers to improve overall performance.

## Description

### Technical Field

The present disclosure relates to methods and apparatuses in wireless communication systems, specifically to transmission schemes and apparatuses for a plurality of carriers in such systems.

### Background Art

The application scenarios of future wireless communication systems are becoming increasingly diverse, with different scenarios imposing varying performance requirements on the system. To meet the different performance needs of a variety of application scenarios, it was decided at the #72 plenary meeting of 3rd Generation Partner Project (3GPP) Radio Access Network (RAN) to study a new air interface technology (New Radio (NR)) (or 5G). Subsequently, at the #75 plenary meeting of 3GPP RAN, the Work Item (WI) for the New Radio (NR) technology was approved, marking the beginning of the standardization process for NR.

Multi-carrier (including carrier aggregation and dual-connection, etc.) technology is an important part of the new air interface technology. To accommodate a wide variety of application scenarios and meet different needs, 3GPP has been evolving on multi-carrier technology from Rel-15.

### Summary of Invention

In multi-carrier communication processes, such as Carrier Aggregation (CA), the system supports Cross Carrier Scheduling. In networks supported by existing standards, such as R17 and earlier versions of 5G New Radio (NR), scheduling is only supported on the corresponding carrier wave or corresponding Physical Downlink Control Channel (PDCCH) for a plurality of scheduled carrier waves, and not supported through the same PDCCH on the same carrier. In the related discussion of Rel-18, the topic of multi-carrier enhancement began to be discussed, and under this topic, one PDCCH can simultaneously scheduling data channels located on a plurality of carriers to improve overall performance.

Disclosed in the present application are a solution to the problem of simultaneously scheduling a plurality of carriers of one PDCCH in a multi-carrier system of NR. It is to be noted that in the description of the present application, PDCCH scheduling in multi-carriers is only used as a typical application scenario or example; the present application is also applicable to other scenarios facing similar problems (such as other scenarios with higher requirements for controlling channel capacity, including but not limited to capacity enhancement systems, higher frequency systems, coverage enhancement systems, unauthorized frequency communication, Internet of Things (IoT), Ultra Reliable Low Latency Communication (URLLC) networks, and vehicular networks) can also obtain similar technical benefits. In addition, adoption of a unified solution across different scenarios (including, but not limited to, multi-carrier scenarios) can also help reduce hardware complexity and costs. In the absence of conflicts, the embodiments and features in the embodiments of the first node device of the present application may be applied to the second node device or vice versa. In particular, the interpretation of terminology, nouns, functions, variables (if not otherwise specified) in the present application may refer to the definitions in the 3GPP specification protocol TS36 series, TS38 series, and TS37 series. If desired, reference may be made to 3GPP criteria TS38.211, TS38.212, TS38.213, TS38.214, TS38.215, TS38.321, TS38.331, TS38.305, TS37.355 to assist in the understanding of the present application.

Disclosed in the present application are a method in the first node for wireless communication, comprising:
receiving a first-type Radio Resource Control (RRC) signaling set;
receiving target Downlink Control Information (DCI);
receiving signals on each of cells included in a first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the above described methods are characterized in that: The payload size of the DCI will be reduced when a plurality of serving cells are scheduled simultaneously by a single DCI, thereby improving system performance.

As an embodiment, the above described methods are characterized in that: Simplify the implementation of a plurality of serving cells being scheduled simultaneously by a single DCI, thereby reducing implementation complexity.

As an embodiment, the above described methods are characterized in that: While ensuring schedule flexibility, reduce signaling overhead and improve system efficiency.

According to one aspect of the present application, wherein the target RRC signaling is PDSCH-Config.

According to one aspect of the present application, wherein the target RRC signaling is ServingCellConfig.

According to one aspect of the present application, wherein it comprises:
sending a first signal;
wherein the first signal comprises Hybrid Automatic Repeat reQuest Acknowledgement (HARQ-ACK) bits for the signal on each cell within the first cell set scheduled by the target DCI, and the first parameter is used for transmitting the first signal; when the number of cells in the first cell set is 1 and the configuration of the target RRC signaling indicates that the target DCI comprises the target domain set, the target DCI comprises the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

As an embodiment, the above described methods are characterized in that: The method in the present application is also applicable to the transmission of uplink HARQ feedback.

According to one aspect of the present application, wherein it comprises:
sending a first signal;
wherein the second parameter is used to determine the Transmitter Power Control (TPC) process adopted by the first signal; when the number of cells in the first cell set is 1 and the configuration of the target RRC signaling indicates that the target DCI comprises the target domain set, the target DCI comprises the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

As an embodiment, the above described methods are characterized in that: The method in the present application are equally applicable to the determination of uplink transmission power.

According to one aspect of the present application, wherein it comprises:
sending a first signal;
wherein the third parameter is used to determine the cell where the Physical Uplink Control Channel (PUCCH) occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default;

As an embodiment, the above described methods are characterized in that: The method in the present application are equally applicable to the determination of the cell occupied by PUCCH.

According to one aspect of the present application, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

As an embodiment, the above described methods are characterized in that: The method in the present application are equally applicable to service cell sleep indications.

Disclosed in the present application are a method in the second node for wireless communication, comprising:
sending a first-type RRC signaling set;
sending target DCI;
sending signals on each cell included in a first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

According to one aspect of the present application, wherein the target RRC signaling is PDSCH-Config.

According to one aspect of the present application, wherein the target RRC signaling is ServingCellConfig.

According to one aspect of the present application, wherein it comprises:
receiving a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

According to one aspect of the present application, wherein it comprises:
receiving a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

According to one aspect of the present application, wherein it comprises:
receiving a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

According to one aspect of the present application, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

Disclosed in the present application are a first node for wireless communication, comprising:
a first receiver that receives a first-type RRC signaling set, receives a target DCI, and receives signals on each cell included in the first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

Disclosed in the present application are a second node for wireless communication, comprising:
a second transmitter, sending a first-type RRC signaling set, sending a target DCI, and sending a signal on each cell included in the first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the advantages of the scheme in the present application are: Simplifying the realization of a plurality of service cells being simultaneously scheduled by one DCI, thereby reducing the realization complexity; and reducing signaling overhead while ensuring schedule flexibility and improving system efficiency.

### Description of Accompanying Drawings

Other features, purposes, and advantages of the present application will become more apparent by reading the detailed description of the non-limiting embodiments with reference to the following drawings:
FIG. 1 illustrates a processing flow diagram of a first node according to an embodiment of the present application;
FIG. 2 illustrates a schematic diagram of a network architecture according to an embodiment of the present application;
FIG. 3 illustrates a schematic diagram of an embodiment of a wireless protocol architecture for a user plane and a control plane according to an embodiment of the present application;
FIG. 4 illustrates a schematic diagram of a first communication device and a second communication device according to an embodiment of the present application;
FIG. 5 illustrates a transmission flow diagram between a first node and a second node according to an embodiment of the present application;
FIG. 6 illustrates a transmission flow diagram of a first signal according to an embodiment of the present application;
FIG. 7 illustrates a schematic diagram of target RRC signaling in accordance with an embodiment of the present application;
FIG. 8 illustrates a schematic diagram of a first cell set according to an embodiment of the present application;
FIG. 9 illustrates a structural block diagram of a processing apparatus for use in a first node according to an embodiment of the present disclosure;
FIG. 10 illustrates a structural block diagram of a processing apparatus for use in a second node according to an embodiment of the present disclosure.

### Specific Implementation Method

The technical solution of the present application will be described in further detail below in conjunction with the accompanying drawings, and it is to be noted that, in the absence of conflicts, the embodiments of the present application and the features in the embodiments may be arbitrarily combined with each other.

### Embodiment 1

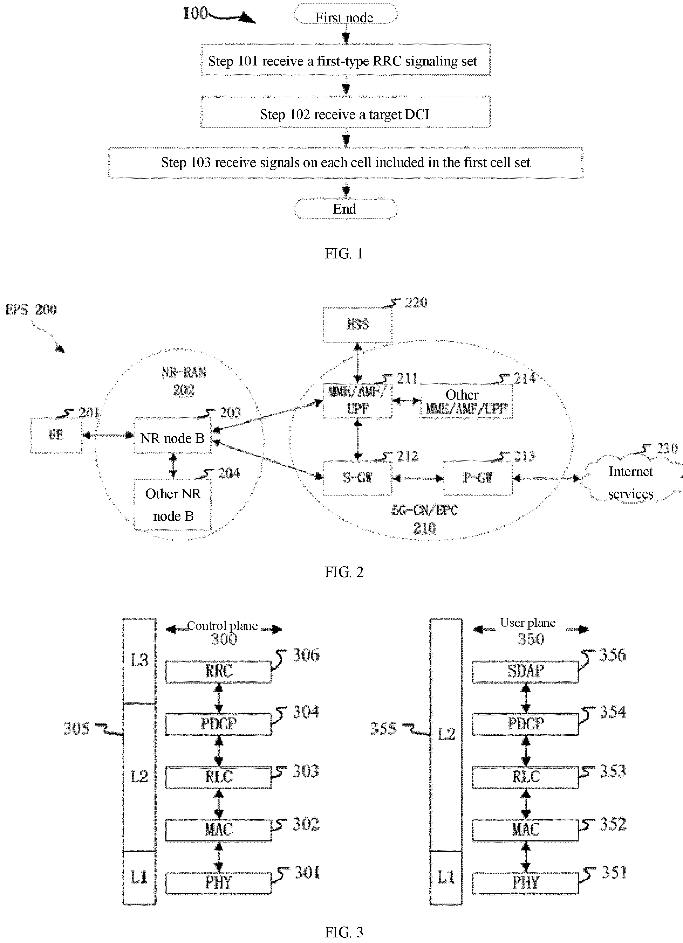

Embodiment 1 exemplifies a processing flow diagram of a first node, as shown in FIG. 1. In the process 100 shown in FIG. 1, each block represents a step. In Embodiment 1, the first node in the present application receives a first-type RRC signaling set in Step 101; receives a target DCI in Step 102; and receives signal on each cell included in the first cell set in Step 103.

In Embodiment 1, the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the first-type RRC signaling set comprises an RRC signaling.

As an embodiment, the first-type RRC signaling set comprises a plurality of RRC signaling.

As an embodiment, the RRC signaling in the present application corresponds to an Information Element (IE) of TS 38.331.

As an embodiment, the target RRC signaling in the present application corresponds to an IE of TS 38.331.

As an embodiment, the physical layer channel occupied by the target DCI comprises PDCCH.

As an embodiment, the first cell set comprises only 1 cell.

As an embodiment, the first cell set comprises only 1 service cell.

As an embodiment, the first cell set comprises a plurality of cells.

As an embodiment, the first cell set comprises a plurality of service cells.

As an embodiment, the target DCI is used to determine the first cell set.

As an embodiment, the target DCI is used to indicate the first cell set.

As an embodiment, the target DCI is used to schedule Physical Downlink Shared Channel (PDSCH) on each cell included in the first cell set.

As an embodiment, the target cell is a service cell.

As an embodiment, the target cell is a cell.

As an embodiment, the target cell corresponds to one Component Carrier (CC).

As an embodiment, the target cell corresponds to a Physical Cell Identity (PCI).

As an embodiment, the target cell corresponds to a ServCellIndex.

As an embodiment, the target cell corresponds to a schedulingCellId.

As an embodiment, the target cell corresponds to a Carrier Indicator Field (CIF).

As an embodiment, when the number of cells included in the first cell set is 1, whether the target domain set is included in the target DCI depends on the configuration of the target RRC signaling.

As an embodiment, when the number of cells included in the first cell set is greater than 1, whether the target DCI comprises the target domain set depends on the configuration of the target RRC signaling.

As an embodiment, when the number of cells included in the first cell set is greater than 1, the target DCI does not comprise the target domain set.

As an embodiment, when the number of cells included in the first cell set is 1 and the configuration of the target RRC signaling indicates that the target DCI comprises the target domain set, the target DCI comprises the target domain set; and when the number of cells included in the first cell set is greater than 1, the target DCI does not comprise the target domain set.

As a sub-embodiment of the present embodiment, when the number of cells included in the first cell set is greater than 1, the configuration of the target RRC signaling is set to default.

As a sub-embodiment of the present embodiment, when the number of cells included in the first cell set is greater than 1, the configuration of the target RRC signaling is absent.

As a sub-embodiment of the present embodiment, when the number of the cells included in the first cell set is greater than 1, and the configuration of the target RRC signaling is not used in the scheduling of the target DCI, the configuration of the target RRC signaling is present.

As an embodiment, the configuration of the target RRC signaling is applicable to the target cell only when the number of cells included in the first cell set is 1.

As an embodiment, the first-type RRC signaling set comprises a PDSCH-config IE.

As an embodiment, the first-type RRC signaling set comprises a PDSCH-ConfigCommon IE.

As an embodiment, the first-type RRC signaling set comprises a PUCCH-config IE.

As an embodiment, the first-type RRC signaling set comprises a PDSCH-ServingCellConfig IE.

As an embodiment, the first-type RRC signaling set comprises a ServingCellConfig IE.

As an embodiment, the target RRC signaling is a PDSCH-config IE.

As an embodiment, the target RRC signaling is a PDSCH-ConfigCommon IE.

As an embodiment, the target RRC signaling is a PUCCH-config IE.

As an embodiment, the target RRC signaling is a PDSCH-ServingCellConfig IE.

As an embodiment, the target RRC signaling is a ServingCellConfig IE.

As an embodiment, when the target DCI comprises the target domain set, the domain in the target domain set is used to determine the antenna port used by the signal scheduled by the target DCI.

As an embodiment, when the target DCI comprises the target domain set, the domain in the target domain set is used to determine the port of the Dedicated Demodulation Reference Signal (DMRS) included in the signal scheduled by the target DCI.

As an embodiment, when the target DCI comprises the target domain set, the domain in the target domain set is used to determine the Code Division Multiplex, Code Multiplex (CDM) group of DMRS included in the signal scheduled by the target DCI.

As an embodiment, when the target DCI comprises the set, the domain in the target domain set is used to determine the number of CDM groups of DMRS included in the signal scheduled by the target DCI.

As an embodiment, the target RRC signaling is a PDSCH-config IE, the configuration of the target RRC signaling corresponds to the antennaPortsFieldPresenceDCI-x-y domain in the PDSCH-config IE, and the target domain set in the target DCI comprises the Antenna port(s) domain, wherein x-y corresponds to the DCI format of the target DCI.

As a sub-embodiment of the present embodiment, when the number of cells included in the first cell set is 1 and the antennaPortsFieldPresenceDCI-x-y domain in the PDSCH-config IE indicates 'enabled', the target DCI comprises the Antenna port(s) domain; when the number of cells included in the first cell set is greater than 1, the target DCI does not comprise the Antenna port(s) domain.

As an embodiment, when the target DCI comprises the target domain set, the domain in the target domain set is used to determine the initialization parameters of the pseudorandom sequence generator adopted by the DMRS included by the signal scheduled by the target DCI.

As an embodiment, the target RRC signaling is a PDSCH-config IE, and the configuration of the target RRC signaling corresponds to the dmrs-SequenceInitializationDCI-x-y domain in the PDSCH-config IE, and the target domain set in the target DCI comprises the DMRS sequence initialization domain, wherein x-y corresponds to the DCI format of the target DCI.

As a sub-embodiment of the present embodiment, when the number of cells included in the first cell set is 1 and the dmrs-SequenceInitializationDCI-x-y domain in the PDSCH-config IE indicates 'enabled', the target DCI comprises the DMRS sequence initialization domain; and when the number of cells included in the first cell set is greater than 1, the target DCI does not comprise the DMRS sequence initialization domain.

As an embodiment, when the target DCI comprises the target domain set, the domain in the target domain set is used to determine the priority level corresponds to the signal scheduled by the target DCI.

As an embodiment, the target RRC signaling is a PDSCH-config IE, the configuration of the target RRC signaling corresponds to the priorityIndicatorDCI-x-y domain in the PDSCH-config IE, and the target domain set in the target DCI comprises the Priority indicator domain, wherein x-y corresponds to the DCI format of the target DCI.

As a sub-embodiment of the present embodiment, when the number of cells included in the first cell set is 1 and the priorityIndicatorDCI-x-y domain in the PDSCH-config IE indicates 'enabled', the target DCI comprises the Priority indicator domain; and when the number of cells included in the first cell set is greater than 1, the target DCI does not comprise the Priority indicator domain.

As an embodiment, when the target DCI comprises the target domain set, the domain in the target domain set is used to determine the PRB bundling mode of the signal scheduled by the target DCI.

As an embodiment, when the target DCI comprises the target domain set, the domain in the target domain set is used to determine the PRB bundle size of the signal scheduled by the target DCI.

As an embodiment, the target RRC signaling is a PDSCH-config IE, and the configuration of the target RRC signaling corresponds to the prb-BundlingTypeDCI-x-y domain in the PDSCH-config IE, and the target domain set in the target DCI comprises the PRB bundling size indicator domain, where x-y corresponds to the DCI format of the target DCI.

As a sub-embodiment of the present embodiment, when the number of cells included in the first cell set is 1 and the prb-BundlingTypeDCI-x-y domain in the PDSCH-config IE indicates 'enabled', the target DCI comprises the PRB bundling size indicator domain; and when the number of cells included in the first cell set is greater than 1, the target DCI does not comprise the PRB bundling size indicator domain.

As a sub-embodiment of the present embodiment, when the number of cells included in the first cell set is 1 and the prb-BundlingTypeDCI-x-y domain in the PDSCH-config IE indicates 'dynamic', the target DCI comprises the PRB bundling size indicator domain; and when the number of cells included in the first cell set is greater than 1, the target DCI does not comprise the PRB bundling size indicator domain.

As an embodiment, the physical layer channel occupied by the signal received over each cell included in the first cell set comprises PDSCH.

As an embodiment, the signal received on each cell included in the first cell set occupies a physical layer channel Synchronization Signal/physical broadcast channel Block (SSB).

As an embodiment, the physical layer channel PDCCH occupied by the signal received over each cell included in the first cell set.

As an embodiment, the transmission channel Downlink Shared Channel (DL-SCH) corresponds to the signal received on each cell included in the first cell set.

As an embodiment, the meaning of the target RRC signaling configured to the target cell comprises: The target RRC signaling is exclusive to the target cell.

As an embodiment, the meaning of the target RRC signaling configured to the target cell comprises: The target RRC signaling comprises the identification corresponds to the target cell, which is one of PCI, ServCellIndex, schedulingCellId, or CIF.

### Embodiment 2

Embodiment 2 exemplifies a schematic diagram of a network architecture, as shown in FIG. 2.

Embodiment 2 exemplifies a schematic diagram of a network architecture according to an embodiment of the present application, as shown in FIG. 2. Fig. 2 illustrates the V2X communication architecture under the 5G NewRadio (NR), Long-Term Evolution (LTE) and Long-Term Evolution Advanced (LTE-A) system architecture. The 5G NR or LTE network architecture may be referred to as some other suitable term of 5GSystem (5GS)/Evolved Packet System (EPS).

The V2X communication architecture of Embodiment 2 comprises User Equipment (UE) 201, UE241, Next-Generation Wireless Access Network (NG-RAN) 202, 5G Core Network (5GC)/Evolved Packet Core (EPC) 210, Home Subscriber Server (HSS)/Unified Data Management (UDM) 220, ProSe function 250, and ProSe application server 230. The V2X communication architecture may be interconnected with other access networks, but these entities/interfaces are not shown for simplicity. As shown, the V2X communication architecture provides packet exchange services. However, it will be readily understood by those skilled in the art that various concepts presented throughout the present application can be extended to a network or other cellular network providing circuit exchange services. NG-RAN comprises NR node B (gNB) 203 and other gNB204. The gNB203 provides for termination of the user and control plane protocol towards UE201. The gNB203 may be connected to other gNB204 via an Xn interface (e.g., backhaul). The gNB203 may also be referred to as a base station, a base transceiver station, a radio base station, a radio transceiver, a transceiver function, a Base Service Set (BSS), an Extension Service Set (ESS), a Transmit Receiving Node (TRP), or some other suitable term. gNB203 provides access points to 5GC/EPC210 for UE201. Examples of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things device, machine type communication device, land vehicle, automobile, wearable device, or any other similar functional apparatuses. Those skilled in the art may also refer to UE201 as mobile station, subscriber station, mobile unit, subscriber unit, wireless unit, remote unit, mobile apparatus, wireless apparatus, remote apparatus, mobile subscriber station, access terminal, mobile terminal, wireless terminal, remote terminal, handheld device, user agent, mobile client, or some other suitable term. gNB203 is connected to 5GC/EPC210 via the S1/NG interface. 5GC/EPC210 comprises Mobility Management Entity (MME)/Authentication Management Field (AMF)/Session Management Function (SMF) 211, other MME/AMF/SMF214, Service Gateway (S-GW)/UserPlaneFunction (UPF) 212 and Packet Date Network Gateway (P-GW)/UPF213. MME/AMF/SMF211 is a control node that processes signaling between UE201 and 5GC/EPC210. In general, MME/AMF/SMF211 provides carrier and connection management. All user Internet Protocal (IP) packages are transmitted via S-GW/UPF212 which is itself connected to P-GW/UPF213. The P-GW provides UE IP address assignment as well as other functions. The P-GW/UPF213 is connected to the Internet service 230. The Internet service 230 comprises an operator's corresponding Internet protocol service, which may include, *inter alia,* the Internet, an intranet, an IMS (IP Multimedia Subsystem, IP Multimedia Subsystem), and a packet exchange streaming service. The ProSe function 250 is a logical function for network-related behavior required for local service (Proximity-based Service (ProSe)), comprises a Direct Provisioning Function (DPF), a Direct Discovery Name Management Function, an EPC-level Discovery ProSe Function, etc. The ProSe application server 230 has the functions of storing the EPC ProSe user identification, mapping between the application layer user identification and the EPC ProSe user identification, and distributing the proSe restricted code suffix pool.

As an embodiment, the UE201 corresponds to the first node in the present application and the gNB203 corresponds to the second node in the present application.

As an embodiment, the UE201 supports a plurality of carrier waves being scheduled by the same DCI.

As an embodiment, the UE201 supports a plurality of service cells being scheduled with the same DCI.

As an embodiment, the UE201 supports trans-carrier scheduleing.

As an embodiment, the NR node B corresponds to the second node in the present application.

As an embodiment, the NR node B supports a plurality of carrier waves being scheduled by the same DCI.

As an embodiment, the NR node B supports that a plurality of service cells are scheduled by the same DCI.

As an embodiment, the NR node B supports trans-carrier scheduling.

As an embodiment, the NR node B is a base station.

As an embodiment, the NR node B is a cell.

As an embodiment, the NR node B comprises a plurality of cells.

As an embodiment, the NR node B is used to determine a transmission on a plurality of service cells.

As an embodiment, the first node in the present application corresponds to the UE201 and the second node in the present application corresponds to the NR node B.

As an embodiment, the first and second nodes in the present application are the UE201 and the gNB203 respectively.

As an embodiment, the first node in the present application is the UE201 and the second node in the present application is the UE241.

### Embodiment 3

Embodiment 3 illustrates a schematic diagram of an embodiment of a wireless protocol architecture for one user plane and a control plane of the present application, as shown in FIG. 3. FIG. 3 is a schematic diagram illustrating an embodiment of a radio protocol architecture for the user plane 350 and the control plane 300, where it demonstrates, with three layers, a radio protocol architecture for a control plane 300 between a first communication node device (RSU in UE, gNB or V2X) and a second communication node device (RSU in gNB, UE or V2X): Layers 1, 2 and 3. The layer 1 (L1 layer) is the lowest layer and implements various Physical Layer (PHY) signal processing functions. The L1 layer will be referred to herein as PHY301. The layer 2 (L2 layer) 305 is over PHY301 and is responsible for the link between the first communication node device and the second communication node device through PHY301. The L2 layer 305 comprises a Medium Access Control (MAC) sublayer 302, a Radio Link Control (RLC), sublayer 303, and a Packet Data Convergence Protocol (PDCP) sublayer 304 which terminate at the second communication node device. The PDCP sublayer 304 provides multiplexing between different radio carriers and logical channels. The PDCP sublayer 304 also provides security by encrypting the data packet and the PDCP sublayer 304 also provides inter-cell movement support for the second communication node device by the first communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplexing between logic and the transmission channel. The MAC sublayer 302 is also responsible for distributing various radio resources (e.g., resource blocks) in one cell between the first communication node devices. The MAC sublayer 302 is also responsible for HARQ operations. The Radio Resource Control (RRC) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 comprises a layer 1 (L1 layer) and a layer 2 (L2 layer), the radio protocol architecture for the first communication node device and the second communication node device is generally the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355. However, the PDCP sublayer 354 also provides header compression for upper-layer data packets to reduce radio transmission overhead. The L2 layer 355 in the user plane 350 also comprises a sublayer 356 of Service Data Adaption Protocol (SDAP), which is responsible for mapping between the QoS stream and Data Radio Bearer (DRB) to support the diversity of the business. Although not shown, the first communication node device may have several upper layers over the L2 layer 355 including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, PDCP304 of the second communication node device is used to generate a schedule of the first communication node device.

As an embodiment, PDCP354 of the second communication node device is used to generate a schedule of the first communication node device.

As an embodiment, the first-type RRC signaling set is generated at the RRC306.

As an embodiment, the target DCI is generated at the PHY301 or the PHY351.

As an embodiment, the signal transmitted on each cell included in the first cell set is generated at the PHY301 or the PHY351.

As an embodiment, the signal transmitted over each cell included in the first cell set is generated at the MAC302 or MAC352.

As an embodiment, the signal transmitted over each cell included in the first cell set is generated at the RRC306.

As an embodiment, the first signal is generated at the PHY301 or the PHY351.

As an embodiment, the first signal is generated at the MAC302 or MAC352.

As an embodiment, the first signal is generated at the RRC306.

As an embodiment, the first node is a terminal.

As an embodiment, the first node is a relay.

As an embodiment, the second node is a terminal.

As an embodiment, the second node is a relay.

As an embodiment, the second node is a base station.

As an embodiment, the second node is one gNB.

As an embodiment, the second node is a Transmitter Receiver Point (TRP).

As an embodiment, the second node is used to manage a plurality of TRPs.

As an embodiment, the second node is a node for managing a plurality of cells.

As an embodiment, the second node is a node for managing a plurality of service cells.

### Embodiment 4

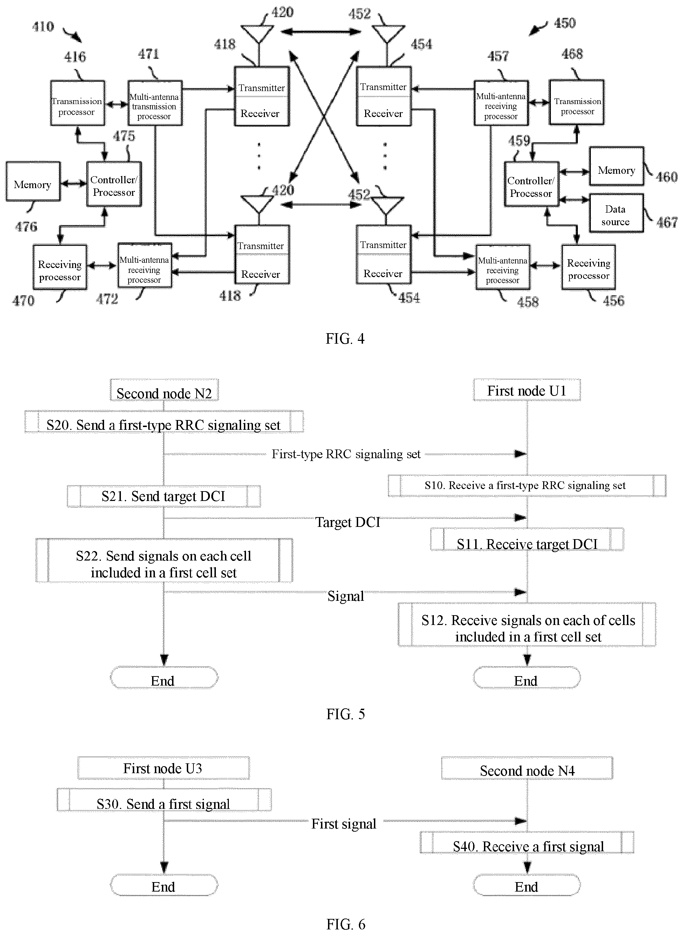

Embodiment 4 illustrates a schematic diagram of a first communication device and a second communication device according to the present application, as shown in FIG. 4. FIG. 4 is a block diagram of a first communication device 450 and a second communication device 410 in communication with each other over an access network.

The first communication device 450 comprises a controller/processor 459, a memory 460, a data source 467, a transmission processor 468, a receiving processor 456, a multi-antenna transmission processor 457, a multi-antenna receiving processor 458, a transmitter/receiver 454, and an antenna 452.

The second communication device 410 comprises a controller/processor 475, a memory 476, a receiving processor 470, a transmission processor 416, a multi-antenna receiving processor 472, a multi-antenna transmission processor 471, a transmitter/receiver 418, and an antenna 420.

In the transmission from the second communication device 410 to the first communication device 450, at the second communication device 410, the upper data packet from the core network is provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logic and the transport channel, and radio resource distribution to the first communication device 450 based on various priority measures. The controller/processor 475 is also responsible for the retransmission of the lost package and the signaling to the first communication device 450. The transmission processor 416 and the multi-antenna transmission processor 471 implement various signal processing functions for the L1 layer (i.e., the physical layer). The transmission processor 416 implements coding and interleaving to facilitate Forward Error Correction (FEC) at the second communication device 410 and mapping of signal clusters based on various modulation schemes (e.g., Binary Phase Shift Keying (BPSK), Quadrature Phase Shift Keying (QPSK), M-Phase Shift Keying (M-PSK), M-Quadrature Amplitude Modulation (M-QAM)). The multi-antenna transmission processor 471 pre-codes encoded and modulated symbols in digital space, including codebook-based pre-coding and non-codebook-based pre-coding, and beam-based processing, generating one or more spatial streams. The transmission processor 416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmission processor 471 then sends the simulated pre-encoding/beaming operation for the time domain multi-carrier symbol flow. Each transmitter 418 converts the baseband multi-carrier symbol flow provided by the multi-antenna transmission processor 471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto the radio frequency carrier and provides a radio frequency flow to the receiving processor 456 into a base band multi carrier symbol flow. The receiving processor 456 and the multi-antenna receiving processor 458 implement various signal processing functions of the L1 layer. The multi-antenna receiving processor 458 performs a received analog pre-encoding/beam-engraving operation on the base band multi-carrier symbol flow from the receiver 454. The receiving processor 456 uses a Fast Fourier Transform (FFT) to convert the base band multi-carrier symbol flow from the time domain to the frequency domain after receiving the analog pre-encoding/beam-based manipulation. In the frequency domain, the physical layer data signal and the reference signal are demultiplexed by the receiving processor 456, where the reference signal is used for channel estimation and the data signal recovers any spatial flow to the first communication device 450 for destination after multi-antenna detection by the multi-antenna receiving processor 458. The symbols on each spatial flow are demodulated and restored in the receiving processor 456 and generate a soft decision. The processor 456 is then decoded and de-interleaving the soft decision to restore the upper layer data and control signal transmitted by the second communication device 410 over the physical channel. The upper layer data and control signals are then provided to the controller/processor 459. The controller/processor 459 implements the functions of the L2 layer. The controller/processor 459 may be associated with a memory 460 storing program code and data. The memory 460 may be referred to as a computer-readable medium. In the transmission from the second communication device 410 to the second communication device 450, the controller/processor 459 provides multiplexing between the transport and logical channel, packet reassembly, decryption, header decompression, control signal processing to recover the upper data packet from the core network. The upper data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logic and transport channels based on wireless resource allocation, implementing L2 layer functions for the user plane and control plane. The controller/processor 459 is also responsible for the retransmission of the lost package and the signaling to the second communication device 410. The transmission processor 468 executes the modulation mapping, channel encoding, while the multi-antenna transmission processor 457 performs digital multi-antenna spatial pre-coding, including both codebook-based pre-coding and non-codebook-based pre-coding, and beam-based processing, and then the transmission processor 468 tailors the generated spatial stream to a multi-wave/single-wave symbol stream, which is provided to a different antenna 452 via the transmitter 454 after a simulated pre-encoded/beam operation in the multi-antenna transmission processor 457. Each transmitter 454 first converts the baseband symbol flow provided by the multi-antenna transmission processor 457 into a radio frequency symbol flow and then provides it to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements L2 layer functions. The controller/processor 475 may be associated with memory 476 storing program code and data. The memory 476 may be referred to as a computer-readable medium. In the transmission from the first communication device 450 to the second communication device 410, the controller/processor 475 provides multiplexing between the transport and logical channel, packet reassembly, decryption, header decompression, control signal processing to recover the upper data packet from the UE450. The upper data packet from the controller/processor 475 may be provided to the core network.

As an embodiment, the first communication device 450 apparatus comprises: at least one processor and at least one memory, and at least the one memory comprising computer program code; at least the one memory and the computer program code being configured to be used together with at least the one processor, the first communication device 450 apparatus at least: receiving a first-type RRC signaling set first, then receiving the target DCI and the received signals on each of cells included in a first cell set; the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the first communication device 450 comprises: A memory storing a computer-readable instruction program that when executed by at least one processor generates an action, the action comprises: receiving a first-type RRC signaling set first, then receiving the target DCI and the received signals on each of cells included in a first cell set; the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the second communication device 410 apparatus comprises: at least one processor and at least one memory, and at least the one memory comprising computer program code; at least the one memory and the computer program code being configured to be used together with at least the one processor. The second communication device 410 apparatus at least: sending a first-type RRC signaling set first, then sending the target DCI and the sent signals on each of cells included in a first cell set; the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the second communication device 410 apparatus comprises: A memory storing a computer-readable instruction program that when executed by at least one processor generates an action, the action comprises: sending a first-type RRC signaling set first, then sending the target DCI and the sent signals on each of cells included in a first cell set; the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, the first communication device 450 corresponds to a first node in the present application.

As an embodiment, the second communication device 410 corresponds to a second node in the present application.

As an embodiment, the first communication device 450 is a UE.

As an embodiment, the first communication device 450 is a terminal.

As an embodiment, the first communication device 450 is a relay.

As an embodiment, the first communication device 450 is a terminal having a plurality of carrier waves simultaneously scheduled through a first PDCCH.

As an embodiment, the second communication device 410 is a base station.

As an embodiment, the second communication device 410 is a relay.

As an embodiment, the second communication device 410 is a network device.

As an embodiment, the second communication device 410 is a service cell.

As an embodiment, the second communication device 410 is a TRP.

As an embodiment, the second communication device 410 is a base station having a plurality of carriers simultaneously scheduled through a first PDCCH.

As an embodiment, at least the first four of the antenna 452, the receiver 454, the multi-antenna receiving processor 458, the receiving processor 456, and the controller/processor 459 are used to receive a first-type RRC signaling set; and at least the first four of the antenna 420, the transmitter 418, the multi-antenna transmission processor 471, the transmission processor 416, the controller/processor 475 are used to send a first-type RRC signaling set.

As an embodiment, at least the first four of the antenna 452, the receiver 454, the multi-antenna receiving processor 458, the receiving processor 456, and the controller/processor 459 are used to receive a target DCI; and at least the first four of the antenna 420, the transmitter 418, the multi-antenna transmission processor 471, the transmission processor 416, the controller/processor 475 are used to send a target DCI.

As an embodiment, at least the first four of the antenna 452, the receiver 454, the multi-antenna receiving processor 458, the receiving processor 456, and the controller/processor 459 are used for receiving signals on each cell included in the first cell set; and at least the first four of the antenna 420, the transmitter 418, the multi-antenna transmission processor 471, the transmission processor 416, the controller/processor 475 are used for receiving signals on each cell included in the first cell set.

As an embodiment, at least the first four of the antenna 452, the transmitter 454, the multi-antenna transmission processor 457, the transmission processor 468, and the controller/processor 459 are used to send a first signal; and at least the first four of the antenna 420, the receiver 418, the multi-antenna receiving processor 472, the receiving processor 470, the controller/processor 475 are used to receive a first signal.

### Embodiment 5

Embodiment 5 exemplifies a transmission flow diagram between a first node and a second node of an embodiment, as shown in FIG. 5. In FIG. 5, the first node U1 and the second node N2 communicate over a wireless link. It is specifically illustrated that the sequence in the present embodiment does not limit the sequence of signal transmission and the sequence of implementation in the present application. In the absence of conflicts, the embodiments, sub-embodiments, and ancillary embodiments of Embodiment 5 can be applied to Embodiment 6 of the present application; conversely, in the absence of conflicts, the embodiments, sub-embodiments, and ancillary embodiments of Embodiment 6 of the present application can be applied to Embodiment 5.

For the **first node U1,** the first-type RRC signaling set is received in step S10; the target DCI is received in step S11; and the signal is received on each cell included in the first cell set in step S12.

For the **second node N2,** the first-type RRC signaling set is sent in step S20; the target DCI is sent in step S21; and the signal is sent on each cell included in the first cell set in step S22.

In Embodiment 5, the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

Typically, the target RRC signaling is PDSCH-Config.

As an embodiment, the target RRC signaling comprises PDSCH-Config.

As an embodiment, the target RRC signaling comprises PDSCH-Config IE.

As an embodiment, the name of the target RRC signaling including PDSCH.

As an embodiment, the name of the target RRC signaling including Config.

As an embodiment, the name of the target RRC signaling including PUCCH.

As an embodiment, the name of the target RRC signaling including ServingCell.

As an embodiment, the name of the target RRC signaling including Common.

Typically, the target RRC signaling is ServingCellConfig.

As an embodiment, the target RRC signaling comprises ServingCellConfig.

As an embodiment, the target RRC signaling comprises ServingCellConfig IE.

Typically, when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

As an embodiment, when the number of cells included in the first cell set is greater than 1 and the configuration of the target RRC signaling indicates that the target DCI comprising the second domain, the target domain set does not comprise the second domain.

As an embodiment, when the number of cells included in the first cell set is greater than 1 and the configuration of the target RRC signaling indicates that the target DCI does not comprise the second domain, the target domain set does not comprise the second domain.

As an embodiment, when the number of cells included in the first cell set is greater than 1, the target domain set does not comprise the target domain set.

As an embodiment, the target DCI comprises the second domain corresponds to the SCell dormancy indication domain in the DCI.

As an embodiment, the target RRC signaling is a ServingCellConfig IE, the configuration of the target RRC signaling comprises at least one of the dormancyGroupWithinActiveTime domain or the DormancyGroupID domain in the ServingCellConfig IE, and the target domain set in the DCI comprises the SCell dormancy indication domain.

As a sub-embodiment of the present embodiment, when the number of cells included in the first cell set is 1 and at least one of the dormancyGroupWithinActiveTime domain or DormancyGroupID domain in the ServingCellConfig IE is configured, the target DCI comprises the SCell dormancy indication domain; when the number of cells included in the first cell set is greater than 1.

As a sub-embodiment of the present embodiment, the SCell dormancy indication domain included in the target DCI is used to indicate that the cells included in the second cell set sleep within active time.

As an embodiment, the first cell set comprises M1 cells, which are positive integers.

As a sub-embodiment of the present embodiment, the M1 is equal to 1.

As a sub-embodiment of the present embodiment, the M1 is greater than 1.

As a sub-embodiment of the present embodiment, a signal is received over each cell included in the first cell set

As an embodiment, both x and y in x-y in the present application are non-negative integers.

As an embodiment, x-y in the present application represents DCI Format x-y.

As an embodiment, the second set of cells comprises M2 cells, which are positive integers.

As a sub-embodiment of the present embodiment, the M2 is equal to 1.

As a sub-embodiment of the present embodiment, the M2 is greater than 1.

### Embodiment 6

Embodiment 6 exemplifies a schematic diagram of a first signal of an embodiment, as shown in FIG. 6. As shown in FIG. 6. In FIG. 6, the first node U3 and the second node N4 communicate over a wireless link. It is specifically illustrated that the sequence in the present embodiment does not limit the sequence of signal transmission and the sequence of implementation in the present application. In the absence of conflicts, the embodiments, sub-embodiments, and ancillary embodiments of Embodiment 6 can be applied to Embodiment 5 of the present application; conversely, in the absence of conflicts, the embodiments, sub-embodiments, and ancillary embodiments of Embodiment 5 of the present application can be applied to Embodiment 6.

For the **first node U3,** a first signal is sent in step S30.

For the **second node N4,** a first signal is received in step S40.

Typically, the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

As an embodiment, when the number of cells included in the first cell set is greater than 1 and the configuration of the target RRC signaling indicates that the target DCI comprises the target domain set, the first parameter is set to default.

As an embodiment, when the number of cells included in the first cell set is greater than 1 and the configuration of the target RRC signaling indicates that the target DCI does not comprise the target domain set, the first parameter is set to default.

As an embodiment, when the number of cells included in the first cell set is greater than 1, the first parameter is set to default.

As an embodiment, the physical layer channel occupied by the first signal comprises PUCCH.

As an embodiment, the physical layer channel occupied by the first signal comprises Physical Uplink Shared Channel (PUSCH).

As an embodiment, the first signal comprises a Uplink Control Information (UCI).

As an embodiment, the first signal is used to indicate whether the signal is properly received on each of the cells included in the first cell set scheduled by the target DCI.

As an embodiment, the target RRC signaling is PDSCH-config IE, and the configuration of the target RRC signaling corresponds to the pdsch-HARQ-ACK-OneShotFeedbackDCI-x-y domain in PDSCH-config IE, and the target domain set in the target DCI comprises the One-shot HARQ-ACK request domain, wherein x-y corresponds to the target DCIDCI format.

As a sub-embodiment of the present embodiment, when the number of cells included in the first cell set is 1 and the pdsch-HARQ-ACK-OneShotFeedbackDCI-x-y domain in the PDSCH-config IE indicates 'enabled', the target DCI comprises the One-shot HARQ-ACK request domain; and when the number of cells included in the first cell set is greater than 1, the target DCI does not comprise the One-shot HARQ-ACK request domain.

As a sub-embodiment of the present embodiment, the One-shot HARQ-ACK request domain included in the target DCI is used to indicate whether the first signal comprises one-shot HARQ feedback.

As an embodiment, the meaning of the first parameter being used for sending of the first signal comprises: The first parameter is used to determine whether the first signal comprises one-shot HARQ feedback.

As an embodiment, the meaning of the first parameter being related to the target domain set included in the target DCI comprises: The first parameter corresponds to the One-shot HARQ-ACK request domain included in the target DCI, and the One-shot HARQ-ACK request domain is used to indicate whether the first signal comprises one-shot HARQ feedback.

As an embodiment, the meaning of "the first parameter is default" comprises: The first parameter is independent of the value indicated by the pdsch-HARQ-ACK-OneShotFeedbackDCI-x-y domain included in the target RRC signaling.

As an embodiment, the meaning of "the first parameter is default" comprises: The first parameter is used to determine that the first signal does not comprise one-shot HARQ feedback.

As an embodiment, the meaning of "the first parameter is default" comprises: The first node considers that the first signal does not comprise one-shot HARQ feedback.

As an embodiment, the meaning of "the first parameter is default" comprises: The value corresponds to the first parameter is independent of the RRC signaling.

As an embodiment, the target RRC signaling is PDSCH-config IE, and the configuration of the target RRC signaling corresponds to the pdsch-HARQ-ACK-EnhType3DCI-x-y domain in the PDSCH-config IE, and the target domain set in the target DCI comprises the Enhanced Type 3 codebook indicator domain, wherein x-y corresponds to the DCI format of the target DCI.

As a sub-embodiment of the present embodiment, when the number of cells included in the first cell set is 1 and the pdsch-HARQ-ACK-EnhType3DCI-x-y domain in the PDSCH-config IE indicates 'enabled', the target DCI comprises the Enhanced Type 3 codebook indicator domain; and when the number of cells included in the first cell set is greater than 1, the target DCI does not comprise the Enhanced Type 3 codebook indicator domain.

As a sub-embodiment of the present embodiment, the Enhanced Type 3 codebook indicator domain included in the target DCI is used to indicate whether the first signal comprises Type 3 HARQ feedback.

As a sub-embodiment of the present embodiment, the Enhanced Type 3 codebook indicator domain included in the target DCI is used to indicate an Index of Type 3 HARQ feedback corresponds to the first signal.

As a sub-embodiment of the present embodiment, the Enhanced Type 3 codebook indicator domain included in the target DCI is used to indicate a PUCCH group corresponds to the first signal.

As an embodiment, the meaning of the first parameter being used for sending of the first signal comprises: The first parameter is used to determine whether the first signal is used for Type 3 HARQ feedback.

As an embodiment, the meaning of the first parameter being related to the target domain set included in the target DCI comprises: The first parameter corresponds to an Enhanced Type 3 codebook indicator domain included in the target DCI, and the Enhanced Type 3 codebook indicator domain is used to indicate whether the first signal is used for Type 3 HARQ feedback.

As an embodiment, the meaning of "the first parameter is default" comprises: The first parameter is independent of the value indicated by the pdsch-HARQ-ACK-EnhType3DCI-x-y domain in the target RRC signaling.

As an embodiment, the meaning of "the first parameter is default" comprises: The first parameter is used to determine that the first signal is not used for Type 3 HARQ feedback.

As an embodiment, the meaning of "the first parameter is default" comprises: The first node considers that the first signal is not used for Type 3 HARQ feedback.

As an embodiment, the target RRC signaling is PDSCH-config IE, and the configuration of the target RRC signaling corresponds to the pdsch-HARQ-ACK-RetxDCI-x-y domain in the PDSCH-config IE, and the target domain set in the target DCI comprises the HARQ-ACK retransmission indicator domain, wherein x-y corresponds to the DCI format of the target DCI.

As a sub-embodiment of the present embodiment, when the number of cells included in the first cell set is 1 and the pdsch-HARQ-ACK-RetxDCI-x-y domain in the PDSCH-config IE indicates 'enabled', the DCI comprises the HARQ-ACK retransmission indicator domain; when the number of cells included in the first cell set is greater than 1, the target DCI does not comprise HARQ-ACK retransmission indicator domain.

As a sub-embodiment of the present embodiment, the HARQ-ACK retransmission indicator domain included in the target DCI is used to indicate whether to initiate a retransmission of the HARQ feedback for the data for the data scheduled by the target DCI.

As a sub-embodiment of the present embodiment, the HARQ-ACK retransmission indicator domain included in the target DCI is used to indicate whether the first signal is a retransmission of HARQ feedback for data scheduled by the target DCI.

As an embodiment, the meaning of the first parameter being used for sending of the first signal comprises: The first parameter is used to determine whether the first signal is used for HARQ retransmission, or the first parameter is used to determine if HARQ retransmission is triggered.

As an embodiment, the meaning of the first parameter being related to the target domain set included in the target DCI comprises: The first parameter corresponds to the HARQ-ACK retransmission indicator domain included in the target DCI, and the HARQ-ACK retransmission indicator domain is used to indicate whether the first signal is used for HARQ retransmission, or the HARQ-ACK retransmission indicator domain is used to indicate whether HARQ retransmission is triggered.

As an embodiment, the meaning of "the first parameter is default" comprises: the first parameter is independent of the value indicated by the pdsch-HARQ-ACK-RetxDCI-x-y domain in the target RRC signaling.

As an embodiment, the meaning of "the first parameter is default" comprises: The first parameter is used to determine that the first signal is not used for HARQ retransmission, or that the target DCI is not used to trigger HARQ retransmission.

As an embodiment, the meaning of "the first parameter is default" comprises: The first node considers that the first signal is not used for HARQ retransmission, or that the target DCI is not used to trigger HARQ retransmission.

Typically, the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

As an embodiment, when the number of cells included in the first cell set is greater than 1 and the configuration of the target RRC signaling indicates that the target DCI comprises the target domain set, the second parameter is set to default.

As an embodiment, when the number of cells included in the first cell set is greater than 1 and the configuration of the target RRC signaling indicates that the target DCI does not comprise the target domain set, the second parameter is set to default.

As an embodiment, when the number of cells included in the first cell set is greater than 1, the second parameter is set to default.

As an embodiment, the target RRC signaling is PUCCH-config IE, and the configuration of the target RRC signaling corresponds to the secondTPCFieldDCI-x-y domain in the PUCCH-config IE, and the target domain set in the target DCI comprises Second TPC command for scheduled PUCCH domain, wherein x-y corresponds to the DCI format of the target DCI.

As a sub-embodiment of the present embodiment, when the number of cells included in the first cell set is 1 and the secondTPCFieldDCI-x-y domain in the PUCCH-config IE indicates 'enabled', the target DCI comprises the Second TPC command for scheduled PUCCH; and when the number of cells included in the first cell set is greater than 1, the target DCI does not comprise Second TPC command for scheduled PUCCH domain.

As a sub-embodiment of the present embodiment, the Second TPC command for scheduled PUCCH domain included in the target DCI is used to indicate the TPC command value corresponds to the first signal.

As an embodiment, the meaning of the TPC process employed by the second parameter for determining the first signal comprises: The second parameter is used to determine a TPC command value corresponds to the first signal.

As an embodiment, the meaning of the TPC process employed by the second parameter for determining the first signal comprises: The second parameter is used to determine a TPC process corresponds to the first signal.

As an embodiment, the meaning of the second parameter being related to the target domain set included in the target DCI comprises: The second parameter corresponds to the Second TPC command for scheduled PUCCH domain included in the target DCI, and the Second TPC command for scheduled PUCCH domain is used to indicate the TPC command value corresponds to the first signal.

As an embodiment, the meaning of "the second parameter is default" comprises: The second parameter is independent of the value indicated by the secondTPCFieldDCI-x-y domain in the target RRC signaling.

As an embodiment, the meaning of "the second parameter is default" comprises: The second parameter is used to determine that the first signal determines the TPC command value solely according to the TPC command for scheduled PUCCH in the target DCI.

As an embodiment, the meaning of "the second parameter is default" comprises: The first node considers that the first signal determines the TPC command value solely according to the TPC command for scheduled PUCCH in the target DCI.

As an embodiment, the meaning of "the second parameter is default" comprises: The value corresponds to the second parameter is independent of the RRC signaling.

Typically, the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

As an embodiment, when the number of cells included in the first cell set is greater than 1 and the configuration of the target RRC signaling indicates that the target DCI comprises the target domain set, the third parameter is set to default.

As an embodiment, when the number of cells included in the first cell set is greater than 1 and the configuration of the target RRC signaling indicates that the target DCI does not comprise the target domain set, the third parameter is set to default.

As an embodiment, when the number of cells included in the first cell set is greater than 1, the third parameter is set to default.

As an embodiment, the target RRC signaling is a PDSCH-config IE, and the configuration of the target RRC signaling corresponds to the pucch-sSCellDynDCI-x-y domain in the PDSCH-config IE, and the target domain set in the target DCI comprises the PUCCH Cell indicator domain, wherein x-y corresponds to the DCI format of the target DCI.

As a sub-embodiment of the present embodiment, when the number of cells included in the first cell set is 1 and the pucch-sSCellDynDCI-x-y domain in the PDSCH-config IE indicates 'enabled', the target DCI comprises the PUCCH Cell indicator domain; and when the number of cells included in the first cell set is greater than 1, the target DCI does not comprise the PUCCH Cell indicator domain.

As a sub-embodiment of the present embodiment, the PUCCH Cell indicator domain included in the target DCI is used to indicate the cell in which the PUCCH occupied by the first signal is located.

As an embodiment, the meaning of the third parameter being used to determine the cell in which the PUCCH occupied by the first signal is located comprises: The third parameter is used to determine the cell in which the PUCCH occupied by the first signal is located.

As an embodiment, the meaning of the third parameter being used to determine the cell in which the PUCCH occupied by the first signal is located comprises: The third parameter is used to determine whether a PUCCH occupied by the first signal is capable of dynamical Switch.

As an embodiment, the meaning of the third parameter being related to the target domain set included in the target DCI comprises: The third parameter corresponds to a PUCCH Cell indictor domain included in the target DCI, the PUCCH Cell indictor domain being used to indicate the cell in which the PUCCH occupied by the first signal is located.

As an embodiment, the meaning of "the third parameter is default" comprises: The third parameter is independent of the value indicated by the pucch-sSCellDynDCI-x-y domain in the target RRC signaling.

As an embodiment, the meaning of "the third parameter is default" comprises: The third parameter is used to determine that the PUCCH occupied by the first signal is located at a location that cannot be dynamically switched.

As an embodiment, the meaning of "the third parameter is default" comprises: The first node considers that the PUCCH occupied by the first signal is located at a location that cannot be dynamically switched.

As an embodiment, the meaning of "the third parameter is default" comprises: The cell in which the PUCCH occupied by the first signal is located is fixed.

As an embodiment, the meaning of "the third parameter is default" comprises: The cell in which the PUCCH occupied by the first signal is located is determined by a pucch-Cell in PDSCH-ServingCellConfigIE.

As an embodiment, the meaning of "the third parameter is default" comprises: The PUCCH occupied by the first signal is located in a cell that is Special Cell (SpCell) in a corresponding Cell group.

As an embodiment, the meaning of "the third parameter is default" comprises: The value corresponds to the third parameter is independent of the RRC signaling.

As an embodiment, the meaning of "the third parameter is default" comprises: The PUCCH occupied by the first signal is located in a cell that is PUCCH SCell.

As a sub-embodiment of the present embodiment, the SCell is a Secondary Cell.

As a sub-embodiment of the present embodiment, the SCell is a Serving Cell.

As an embodiment, the step S30 is located after the step S12 in Embodiment 5.

As an embodiment, the step S40 is located after the step S22 in Embodiment 5.

As an embodiment, the step S30 is located after step S11 and before step S12 in embodiment 5.

As an embodiment, the step S40 is located after step S21 in embodiment 5 and before step S22.

### Embodiment 7

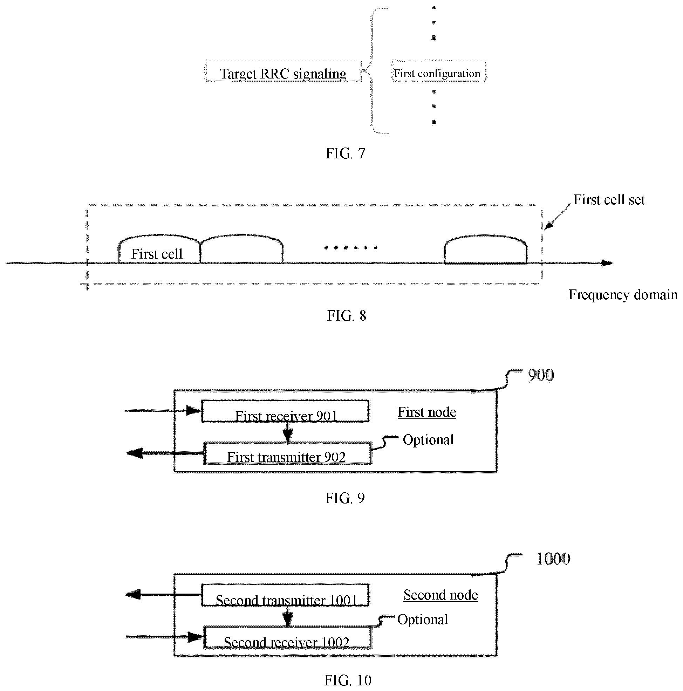

Embodiment 7 exemplifies a schematic diagram of target RRC signaling in an embodiment, as shown in FIG. 7. In FIG. 7, the target RRC signaling is configured to the target cell, the target RRC signaling comprises a first configuration, and whether the target DCI comprises a first domain depends on the number of cells included in the first cell set in the present application.

As an embodiment, the target RRC signaling corresponds to PUCCH-config IE, and the first configuration corresponds to the secondTPCFieldDCI-x-y-r-z, wherein x-y represents the corresponding DCI format, r-z represents the release version, and the first domain corresponds to the Second TPC command for scheduled PUCCH domain in the DCI.

As an embodiment, the target RRC signaling corresponds to PDSCH-config IE, and the first configuration corresponds to antennaPortsFieldPresenceDCI-x-y-r-z, wherein x-y represents the corresponding DCI format, r-z represents the release version, and the first domain corresponds to the Antenna port domain in the DCI.

As an embodiment, the target RRC signaling corresponds to PDSCH-config IE, the first configuration corresponds to dmrs-SequenceInitializationDCI-x-y-r-z, wherein x-y represents corresponding DCI format, r-z represents the release version, and the first domain corresponds to the DMRS sequence initialization domain in the DCI.

As an embodiment, the target RRC signaling corresponds to PDSCH-config IE, and the first configuration corresponds to the priorityIndicatorDCI-x-y-r-z, wherein x-y represents the corresponding DCI format, r-z represents the release version, and the first domain corresponds to the Priority indicator domain in the DCI.

As an embodiment, the target RRC signaling corresponds to PDSCH-config IE, and the first configuration corresponds to pdsch-HARQ-ACK-EnhType3DCI-x-y-r-z, wherein x-y represents the corresponding DCI format, r-z represents the release version, and the first domain corresponds to the Enhanced Type 3 codebook indicator domain in the DCI.

As an embodiment, the target RRC signaling corresponds to PDSCH-config IE, and the first configuration corresponds to pdsch-HARQ-ACK-RetxDCI-x-y-r-z, wherein x-y represents corresponding DCI format, r-z represents release version, and the first domain corresponds to the HARQ-ACK retransmission indicator domain in the DCI.

As an embodiment, the target RRC signaling corresponds to PDSCH-config IE, and the first configuration corresponds to pucch-sSCellDynDCI-x-y-r-z, wherein x-y represents the corresponding DCI format, r-z represents the release version, and the first domain corresponds to the PUCCH Cell indicator domain in the DCI.

As an embodiment, the target RRC signaling corresponds to PDSCH-config IE, the first configuration corresponds to prb-BundlingType, and the first domain corresponds to a PRB bundling size indicator domain in DCI.

As an embodiment, the target RRC signaling corresponds to ServingCellConfig IE, the first configuration corresponds to dormancyGroupWithinActiveTime, and the first domain corresponds to a SCell dormancy indication domain in DCI.

As an embodiment, the target RRC signaling corresponds to ServingCellConfig IE, the first configuration corresponds to DormancyGroupID-r-z, wherein r-z represents the release version, and the first domain corresponds to the SCell dormancy indication domain in the DCI.

### Embodiment 8

Embodiment 8 exemplifies a schematic diagram of a first cell set according to an embodiment of the present application, as shown in FIG. 8. In FIG. 8, the first cell set comprises M1 cells, the first cell being one of the M1 cells.

As an embodiment, the first cell is any one of the M1 cells.

As an embodiment, the M1 is a positive integer greater than 1.

As an embodiment, the target DCI is used to indicate the M1 cells.

As an embodiment, RRC signaling is used to indicate the M1 cells.

### Embodiment 9

Embodiment 9 exemplifies a block structural diagram of a processing apparatus in a first node; as shown in FIG. 9. In FIG. 9, the first node 900 comprises a first receiver 901.
a first receiver 901, receiving a first-type RRC signaling set, receiving a target DCI, and receiving a signal on each cell included in the first cell set;

In Embodiment 9, the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling. As an embodiment, the target RRC signaling is PDSCH-Config.

As an embodiment, wherein the target RRC signaling is PDSCH-Config.

As an embodiment, the target RRC signaling is ServingCellConfig.

As an embodiment, the first node comprises:
a first transmitter 902, sending a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

As an embodiment, the first node comprises:
a first transmitter 902, sending a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

As an embodiment, the first node comprises:
a first transmitter 902, sending a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

As an embodiment, when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

As an embodiment, the first transmitter 902 is optional.

As an embodiment, the first receiver 901 comprises at least the first four of an antenna 452, a receiver 454, a multi-antenna receiving processor 458, a receiving processor 456, and a controller/processor 459 of Embodiment 4.

As an embodiment, the first transmitter 902 comprises at least the first four of an antenna 452, a transmitter 454, a multi-antenna transmission processor 457, a transmission processor 468, a controller/processor 459 of Embodiment 4.

### Embodiment 10

Embodiment 10 exemplifies a block structural diagram of a processing apparatus in a second node. , as shown in FIG. 10. In FIG. 10, the second node 1000 comprises a second transmitter 1001.
a second transmitter 1001, sending a first-type RRC signaling set, sending a target DCI, and sending a signal on each cell included in the first cell set;

In Embodiment 10, the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

As an embodiment, wherein the target RRC signaling is PDSCH-Config.

As an embodiment, the target RRC signaling is ServingCellConfig.

As an embodiment, the first node comprises:
a second receiver 1002, receiving a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

As an embodiment, the first node comprises:
a second receiver 1002, receiving a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

As an embodiment, the first node comprises:
a second receiver 1002, receiving a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

As an embodiment, when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

As an embodiment, the second receiver 1002 is optional.

As an embodiment, the first transmitter 1001 comprises at least the first four of an antenna 420, a transmitter 418, a multi-antenna transmission processor 471, a transmission processor 416, a controller/processor 475 of Embodiment 4.

As an embodiment, the second receiver 1002 comprises at least the first four of an antenna 420, a receiver 418, a multi-antenna receiving processor 472, a receiving processor 470, a controller/processor 475 of embodiment 4.

Those of ordinary skill in the art may understand that all or part of the steps in the above described methods may be accomplished by a program directing related hardware that may be stored in computer-readable storage media, such as read-only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules, and the present application is not limited to the combination of software and hardware in any particular form. The first node in the present application includes, but is not limited to, cell phones, tablets, notebooks, network cards, low-power devices, eMTC devices, NB-IoT devices, in-vehicle communication devices, transportation vehicles, cars, RSUs, aircrafts, airplanes, drones, remotely controlled aircrafts and other wireless communication devices. The second node in the present application includes, but is not limited to, macro cellular base stations, micro cell base stations, small cellular base stations, femtocell base stations, relay base stations, eNB, gNB, Transmission Reception Points (TRP), GNSS, relay satellites, satellite base stations, aerial base stations, RSUs, drones, testing equipment, such as transceivers or signaling testers simulating part of the functions of a base station, and other wireless communication devices.

Those skilled in the art will understand that the present disclosure can be implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

## Claims

1. A first node for wireless communication, wherein it comprises:
a first receiver that receives a first-type RRC signaling set, receives a target DCI, and receives signals on each cell included in the first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

2. The first node according to Claim 1, wherein the target RRC signaling is PDSCH-Config.

3. The first node according to Claim 1 or 2, wherein the target RRC signaling is ServingCellConfig.

4. The first node according to any one of Claims 1-3, wherein it comprises:
a first transmitter, sending a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

5. The first node according to any one of Claims 1-3, wherein it comprises:
a first transmitter, sending a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

6. The first node according to any one of Claims 1-3, wherein it comprises:
a first transmitter, sending a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

7. The first node according to any one of Claims 1-6, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

8. A second node for wireless communication, wherein it comprises:
a second transmitter, sending a first-type RRC signaling set, sending a target DCI, and sending a signal on each cell included in the first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

9. The second node according to Claim 8, wherein the target RRC signaling is PDSCH-Config.

10. The second node according to Claim 8 or 9, wherein the target RRC signaling is ServingCellConfig.

11. The second node according to any one of Claims 8-10, wherein it comprises:
a second receiver, receiving a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

12. The second node according to any one of Claims 8-10, wherein it comprises:
a second receiver, receiving a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

13. The second node according to any one of Claims 8-10, wherein it comprises:
a second receiver, receiving a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

14. The second node according to any one of Claims 8-13, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

15. A method for a first node in wireless communication, wherein it comprises:
receiving a first-type RRC signaling set;
receiving a target DCI;
receiving signals on each of cells included in a first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

16. The method in the first node according to Claim 15, wherein the target RRC signaling is PDSCH-Config.

17. The method in the first node according to Claim 15 or 16, wherein the target RRC signaling is ServingCellConfig.

18. The method in the first node according to any one of Claims 15-17, wherein it comprises:
sending a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

19. The method in the first node according to any one of Claims 15-17, wherein it comprises:
sending a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

20. The method in the first node according to any one of Claims 15-17, wherein it comprises:
sending a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

21. The method in the first node according to any one of Claims 15-20, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.

22. A method for a second node in wireless communication, wherein it comprises:
sending a first-type RRC signaling set;
sending target DCI;
sending signals on each cell included in a first cell set;
wherein the first-type RRC signaling set comprises a target RRC signaling, which is configured for a target cell; the target DCI is used for scheduling signals on the cells included in the first cell set, and the target cell is one of the cells in the first cell set; whether the target DCI comprises a target domain set depends on the number of cells in the first cell set; when the first cell set comprises one cell, whether the target DCI comprises a target domain set depends on the configuration of the target RRC signaling; and when the first cell set comprises a plurality of cells, whether the target DCI comprises a target domain set does not depend on the configurations of the target RRC signaling.

23. The method in the second node according to Claim 22, wherein the target RRC signaling is PDSCH-Config.

24. The method in the second node according to Claim 22 or 23, wherein the target RRC signaling is ServingCellConfig.

25. The method in the second node according to any one of Claims 22-24, wherein it comprises:
receiving a first signal;
wherein the first signal includes HARQ-ACK bits for the signal on each cell within the first cell set scheduled by the target DCI, and the first parameter is used for transmitting the first signal; when the number of cells in the first cell set is 1 and the configuration of the target RRC signaling indicates that the target DCI includes the target domain set, the target DCI includes the target domain set, and the first parameter is related to the target domain set included in the target DC; and when the number of cells in the first cell set is greater than 1 or the configuration of the target RRC signaling indicates that the target DCI does not comprise the target domain set, the first parameter is set to default.

26. The method in the second node according to any one of Claims 22-24, wherein it comprises:
receiving a first signal;
wherein the second parameter is used to determine the TPC process adopted by the first signal; when the number of cells in the first cell set is 1 and the configuration of the target RRC signaling indicates that the target DCI includes the target domain set, the target DCI includes the target domain set, and the second parameter is related to the target domain set included in the target DCI; and when the number of cells in the first cell set is greater than 1 or the configuration of the target RRC signaling indicates that the target DCI does not comprise the target domain set, the second parameter is set to default.

27. The method in the second node according to any one of Claims 22-24, wherein it comprises:
receiving a first signal;
wherein the third parameter is used to determine the cell in which the PUCCH occupied by the first signal is located; when the number of cells in the first cell set is 1 and the configuration of the target RRC signaling indicates that the target DCI comprises the target domain set, the target DCI comprises the target domain set, and the third parameter is related to the target domain set included in the target DCI; and when the number of cells in the first cell set is greater than 1 or the configuration of the target RRC signaling indicates that the target DCI does not comprise the target domain set, the third parameter is set to default.

28. The method in the second node according to any one of Claims 22-27, wherein when the number of cells included in the first cell set is 1 and the configuration of the target RRC signaling indicates that the target domain set included in the target DCI comprises a second domain, the target domain set included in the target DCI comprises the second domain, which is used to determine that the cells included in the second cell set enter dormancy within active time; and when the number of cells included in the first cell set is greater than 1 or the configuration of the target RRC signaling indicates that the target DCI does not comprise the second domain, the target domain set included in the target DCI does not comprise the second domain, and the target DCI is not used for serving cell dormancy indication.
